# EUROPÄISCHE PATENTSCHRIFT

(11) **EP 3 828 025 B1**
(45) Veröffentlichungstag und Bekanntmachung des Hinweises auf die Patenterteilung: **06.11.2024**
(21) Anmeldenummer: 20193166.4
(22) Anmeldetag: 27.08.2020
(51) Int. Cl.: B60M 1/30

(54) **VORKONTAKTKLEMME FÜR EINE SCHLEIFLEITUNG, EINFAHRHILFE UND SCHLEIFLEITUNGSSYSTEM**
PRE-CONTACT CLIP FOR A SLIDING CONTACT LINE, INSERTION AID AND SLIDING CONTACT SYSTEM
BORNE DE PRÉ-CONTACT POUR UNE LIGNE DE CONTACT, AIDE À L'ACCÈS ET SYSTÈME DE LIGNE DE CONTACT

(30) Priorität: 28.11.2019 DE 102019132352
(43) Veröffentlichungstag der Anmeldung: 02.06.2021
(73) Patentinhaber: Conductix-Wampfler GmbH, 79576 Weil am Rhein (DE)
(72) Erfinder: Götz, Wolfgang Erwin, 79418 Schliengen (DE); Hagin, Moritz, 79576 Weil am Rhein (DE); Lang, Dietmar, 79418 Schliengen (DE)
(74) Vertreter: Charrier Rapp & Liebau

(56) Entgegenhaltungen:
- DE-A1- 102017 111 984
- DE-U1- 202013 100 223

## Beschreibung

Die Erfindung betrifft eine Vorkontaktklemme für eine Schleifleitung nach dem Oberbegriff des Anspruchs 1, eine Einfahrhilfe nach dem Oberbegriff des Anspruchs 4 sowie ein Schleifleitungssystem nach dem Oberbegriff des Anspruchs 10.

Schleifleitungen werden zunehmend auch für die Versorgung von mobilen elektrischen Verbrauchern mit elektrischer Energie und Daten eingesetzt, die nicht ständig an ein und derselben Schleifleitung entlangfahren, sondern öfters zwischen unterschiedlichen Schleifleitung wechseln. Dabei fahren die zugehörigen Schleifkontakte eines Stromabnehmers des elektrischen Verbrauchers oft aus der Schleifleitung aus und dann wieder in eine andere Schleifleitung ein. Hierzu werden üblicherweise Ein- und Ausfahrtrichter verwendet, die das Einfahren von in der Regel mehreren, parallel zueinander angeordneten Schleifkontakten in die jeweiligen Leiterstränge der Schleifleitung erleichtern. Hierbei kontaktieren üblicherweise alle Schleifkontakte ihren jeweiligen Leiterstrang der Schleifleitung zur gleichen Zeit.

Es besteht nun der Wunsch, dass einzelne Schleifkontakte ihren zugehörigen Leiterstrang beim Einfahren in die Schleifleitung früher und beim Ausfahren aus der Schleifleitung länger kontaktieren als andere Schleifkontakte. Beispielsweise sollen Daten-Schleifkontakte, die eine Datenverbindung zwischen dem Verbraucher und einer zentralen Steuerung über einen oder mehrere Daten-Leiterstrang der Schleifleitung herstellen, möglichst frühzeitig und bevorzugt vor den Schleifkontakten für die elektrische Energieübertragung einen elektrischen Kontakt zu ihrem jeweiligen Daten-Leiterstrang herstellen, um noch vor dem Beginn der elektrischen Energieübertragung die oft auch zur Steuerung der Energieübertragung benötigten Daten zwischen Steuerung und Verbraucher austauschen zu können. Entsprechend soll der Daten-Schleifkontakt dann auch möglichst lange in Kontakt mit dem Daten-Leiterstrang bleiben, bevorzugt länger als die anderen Schleifkontakte für die Energieübertragung.

Die DE 10 2017 111 984 A1 offenbart ein Schleifleitungssystem mit einer Schleifleitung, die mit einer ersten Befestigungsvorrichtung an einem ersten Montageelement und einer hiervon in einer Längsrichtung der Schleifleitung beabstandeten zweiten Befestigungsvorrichtung an einem zweiten Montageelement befestigt ist, wobei die erste Befestigungsvorrichtung in Längsrichtung unbeweglich mit der Schleifleitung und mit dem ersten Montageelement verbunden ist, wobei das Halteelement die Schleifleitung quer zu ihrer Längsrichtung unbeweglich an dem Montageelement befestigt. Dabei ist die zweite Befestigungsvorrichtung in Längsrichtung beweglich mit der Schleifleitung und/oder mit dem Montageelement verbunden. Hierdurch kann eine durch Temperatureffekte bedingte Längsausdehnung der Schleifleitung auf einfache Weise ausgeglichen werden.

Die DE 20 2013 100 223 U1 offenbart ein Verbindungselement zum Stoß-an-Stoß Verbinden von zwei aneinander zusammenstoßenden Stromschienen einer Schleifleitung, mit einem länglichen Grundkörper mit einander in seiner Längsrichtung gegenüberliegenden Einsteckenden zum Einstecken in Längshohlräume der Stromschienen wobei der Grundkörper auf mindestens einer seiner Längsseiten Verbindungsvertiefungen zum Vercrimpen mit mindestens einer Seitenwandung der Stromschienen aufweist.

Aufgabe der vorliegenden Erfindung ist es deshalb, die obigen Nachteile zu beseitigen und eine möglichst lang andauernde Kontaktierung eines oder mehrerer Schleifkontakte mit der Schleifleitung zu ermöglichen. Insbesondere soll sichergestellt werden, dass mindestens ein Schleifkontakt eines Stromabnehmers länger mit einem Leiterstrang der Schleifleitung leitend verbunden ist als andere Schleifkontakte des Stromabnehmers. Bevorzugt soll der mindestens eine Schleifkontakt des Stromabnehmers den ihm zugeordneten Leiterstrang leitend kontaktieren, bevor mindestens ein anderer Schleifkontakt des Stromabnehmers den ihm zugeordneten Leiterstrang kontaktiert. Umgekehrt soll der mindestens eine Schleifkontakt des Stromabnehmers den leitenden Kontakt mit dem ihm zugeordneten Leiterstrang erst dann verlassen, wenn der mindestens eine andere Schleifkontakt des Stromabnehmers nicht mehr mit dem ihm zugeordneten Leiterstrang leitend kontaktiert.

Die Erfindung löst diese Aufgabe durch eine Vorkontaktklemme für eine Schleifleitung mit den Merkmalen des Anspruchs 1, eine Einfahrhilfe mit den Merkmalen des Anspruchs 4 sowie ein Schleifleitungssystem mit den Merkmalen des Anspruchs 10. Vorteilhafte Weiterbildungen und Ausgestaltungen der Erfindung sind in den Unteransprüchen angegeben.

Eine eingangs genannte Vorkontaktklemme ist erfindungsgemäß dadurch gekennzeichnet, dass die Vorkontaktklemme einen in Längsrichtung verlaufenden, bevorzugt muldenförmigen, Gleitbereich für einen Schleifkontakt eines längs der Schleifleitung verfahrbaren elektrischen Verbrauchers aufweist. Weiter kann der Vorkontakt bevorzugt eine in Längsrichtung verlaufende Kontaktzunge, bevorzugt mit vorne abgerundetem Ende, aufweisen.

Vorteilhaft kann die Vorkontaktklemme ein oberes Klemmstück und ein unteres Klemmstück aufweisen. Dabei können die Klemmstücke jeweils ein zum Einstecken in einen Innenraum einer Stromschiene angepasstes Einsteckende aufweisen. Bevorzugt können die Einsteckenden im zusammengesetzten Zustand der Vorkontaktklemme im Querschnitt quer zur Längsrichtung einen an den Innenraum der Stromschiene angepassten Außenquerschnitt aufweisen.

Vorteilhaft können die Klemmstücke jeweils einen Klemmbereich zum gemeinsamen Festklemmen an der Einfahrhilfe aufweisen. Bevorzugt können die Klemmstücke im zusammengesetzten Zustand der Vorkontaktklemme auf einander zugewandten Seiten einen Klemmspalt ausbilden, der zum Umgreifen einer Klemmrippe der Einfahrhilfe ausgebildet ist. Dabei kann mindestens eines der Klemmstücke auf seiner dem anderen Klemmstück zugewandten Seite vorteilhaft eine Ausnehmung zur Ausbildung des Klemmspaltes im zusammengesetzten Zustand der Vorkontaktklemme aufweisen. Bevorzugt kann das mindestens eine Klemmstück auf seiner dem anderen Klemmstück zugewandten Seite einen Vorsprung und eine in Längsrichtung hierzu versetzte Anschlagsnase aufweist, zwischen denen der Klemmspalt für die Klemmrippe ausgebildet ist. Vorteilhaft kann die Vorkontaktklemme Durchgangsöffnungen für eine Befestigungsschraube aufweisen. Weiter vorteilhaft kann die Vorkontaktklemme eine Befestigungsvorrichtung zur elektrischen Verbindung mit einem Anschluss- bzw. Datenkabel aufweisen. Vorteilhaft kann der Vorkontakt um einen vorgegebenen Überstand über den Verbindungsbereich hinausstehen.

Vorteilhaft kann der Vorkontakt auch einstückig mit der Vorkontaktklemme ausgebildet sein.

Alternativ kann der Vorkontakt bevorzugt als eigenständiges Bauteil ausgebildet sei. Bevorzugt kann der Vorkontakt dann getrennt von der Vorkontaktklemme ausgebildet sein, die Vorkontaktklemme kann somit mindestens zweiteilig ausgebildet sein. Vorteilhaft kann der Vorkontakt elektrisch leitend mit dem oberen Klemmstück verbunden sein. Vorteilhaft kann der Vorkontakt einen Steckverbinder und die Vorkontaktklemme eine entsprechende Einsteckbuchse für den Steckverbinder aufweisen, in welche der Steckverbinder eingesteckt werden kann, um auf einfache Weise den elektrischen Kontakt zwischen Vorkontakt und Vorkontaktklemme herzustellen. Es sind aber auch andere elektrische Verbindungen möglich. Hierdurch können stets gleich ausgebildete Vorkontaktklemmen für alle Stromschienen verwendet werden, und die für den längeren Vorkontakt vorgesehenen Vorkontaktklemmen können einfach durch die Ausgestaltung des Einfahrtrichters mit bzw. ohne Vorkontakten bestimmt.

Eine eingangs genannte Einfahrhilfe ist erfindungsgemäß dadurch gekennzeichnet, dass die Einfahrhilfe einen in Längsrichtung um einen Überstand in Richtung des Ein-/Ausfahrbereichs verlaufenden Aufnahmebereich für einen Vorkontakt der Vorkontaktklemme aufweist.

Vorteilhaft kann die Einfahrhilfe ein Einfahrtrichter mit einer in eine zur Längsrichtung senkrecht verlaufenden Höhenrichtung zu seinem schleifleitungsseitigen Ende der Einfahrhilfe hin ansteigenden Einfahrrampe sein. Bevorzugt kann der Aufnahmebereich eine an die Form des Vorkontakts angepasste Vertiefung aufweisen. Besonders vorteilhaft kann der Vorkontakt fest in dem Aufnahmebereich angeordnet sein. Dabei kann vorteilhaft der Vorkontakt als eigenständiges Bauteil ausgebildet sei. Bevorzugt kann der Vorkontakt dann getrennt von der Vorkontaktklemme ausgebildet sein, die Vorkontaktklemme kann somit mindestens zweiteilig ausgebildet sein. Vorteilhaft kann der Vorkontakt elektrisch leitend mit dem oberen Klemmstück verbunden sein. Vorteilhaft kann der Vorkontakt einen Steckverbinder und die Vorkontaktklemme eine entsprechende Einsteckbuchse für den Steckverbinder aufweisen, in welche der Steckverbinder eingesteckt werden kann, um auf einfache Weise den elektrischen Kontakt zwischen Vorkontakt und Vorkontaktklemme herzustellen. Es sind aber auch andere elektrische Verbindungen möglich. Hierdurch können stets gleich ausgebildete Vorkontaktklemmen für alle Stromschienen verwendet werden, und die für den längeren Vorkontakt vorgesehenen Vorkontaktklemmen können einfach durch die Ausgestaltung des Einfahrtrichters mit bzw. ohne Vorkontakten bestimmt.

Alternativ kann der Vorkontakt auch einstückig mit der Vorkontaktklemme ausgebildet sein.

Ein eingangs genanntes Schleifleitungssystem ist erfindungsgemäß dadurch gekennzeichnet, dass der erste Leiterstrang mittels einer oben und nachfolgend beschriebenen Vorkontaktklemme mit der Einfahrhilfe verbunden ist.

Besonders vorteilhaft kann die Einfahrhilfe einen der Schleifleitung in Längsrichtung abgewandten Ein-/Ausfahrbereich für die Schleifkontakte aufweisen, wobei der Vorkontakt der Vorkontaktklemme in Längsrichtung weiter in Richtung des Einfahrbereichs reicht als die Anschlussklemme. Weiter vorteilhaft kann der Ein-/Ausfahrbereich eine zur Aufnahme des Vorkontakts vorgesehene, bevorzugt an die Form des Vorkontakts angepasste Vertiefung aufweist. Bevorzugt kann ein Gleitbereich der Vorkontaktklemme für den Schleifkontakt gleichmäßig in einen Schleifabschnitt einer Stromschiene des ersten Leiterstrangs übergehen. Besonders vorteilhaft kann der Vorkontakt gleichmäßig in den Einfahrbereich der Einfahrhilfe übergeht. Vorteilhaft kann der Einfahrbereich wie oben und nachfolgend beschrieben ausgebildet sein.

Die Erfindung wird nachfolgend anhand eines detaillierten Ausführungsbeispiels mit Bezug auf die begleitenden Zeichnungen beschrieben. Diese zeigen:
- **Fig. 1**: eine schematische dreidimensionale Explosionsansicht eines erfindungsgemäßen Schleifleitungssystems;
- **Fig. 2**: eine Schnittansicht durch die Schleifleitung aus Fig. 1 senkrecht zur Längsrichtung der Schleifleitung und einen in Fig. 1 nicht gezeigten, schematisch dargestellten Stromabnehmer;
- **Fig. 3**: eine zum Teil aufgebrochene Seitenansicht des Schleifleitungssystems aus Fig. 1;
- **Fig. 4**: eine Draufsicht auf das Schleifleitungssystem aus Fig. 1;
- **Fig. 5**: eine schematische dreidimensionale Ansicht einer Anschlussklemme;
- **Fig. 6**: eine Seitenansicht der Anschlussklemme aus Fig. 5;
- **Fig. 7**: eine schematische dreidimensionale Ansicht einer Anschlussklemme;
- **Fig. 8**: eine Seitenansicht der Vorkontaktklemme aus Fig. 7.

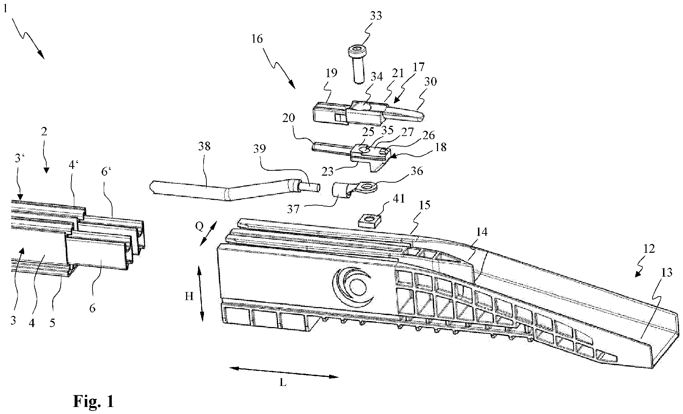

Fig. 1 zeigt ein einen Teil eines Schleifleitungssystem 1 mit einem Endabschnitt einer in eine Längsrichtung L verlaufenden Schleifleitung 2. Die Schleifleitung 2 weist zwei in Längsrichtung L verlaufende, zueinander parallele Leiterstränge 3 und 3' auf, welche in eine zur Längsrichtung L senkrecht verlaufende Querrichtung Q bevorzugt parallel nebeneinander angeordnet sind. Eine Höhenrichtung H steht senkrecht zur Längsrichtung L und Querrichtung Q. Die Höhenrichtung H bezeichnet dabei keine "geographische" vertikal Höhe, wie in den vorliegenden Zeichnungen gezeigt. Denn das Schleifleitungssystem 1 kann und wird auch kopfüber oder zur Seite oder in jede andere Raumrichtung ausgerichtet eingesetzt.

Da die Leiterstränge 3, 3' identisch ausgebildet sind, wird deren Ausgestaltung nachfolgend vor allem anhand des ersten Leiterstrangs 3 erläutert, entsprechende Ausführungen gelten auch für den zweiten Leiterstrang 3', sofern nichts anderes angegeben. Auch werden gleiche Teile mit den gleichen Bezugszeichen bezeichnet, wobei die des zweiten Leiterstrangs 3' mit einem Apostroph versehen werden.

Die Leiterstränge 3, 3' umfassen in an sich bekannter Weise ein erstes Isolierprofil 4 und ein zweites Isolierprofil 4` aus einem elektrisch isolierenden Material, bevorzugt Kunststoff oder anderen geeignete Materialien. An ihrem in Fig. 1 unteren Ende sind die beiden Isolierprofile 4, 4` mit einem Verbindungssteg 5 aus dem gleichen Material einstückig verbunden, die Isolierprofile 4, 4` können aber auch auf andere Weise und auch voneinander getrennt nebeneinander angeordnet werden.

Die Isolierprofile 4, 4` umgeben jeweils eine Stromschiene 6, 6` aus einem elektrisch gut leitenden Material, insbesondere Metall wie z.B. Aluminium oder Kupfer. Es können aber auch andere elektrisch leitende Materialien, ggf. auch Kompositmaterialien verwendet werden.

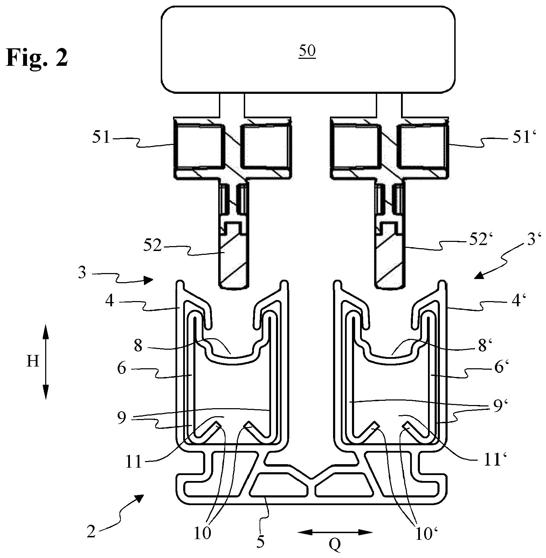

Das Schleifleitungssystem 1 dient in an sich bekannter Weise zur Versorgung eines in der Längsrichtung L daran verfahrbar oder beweglich angeordneten elektrischen Verbrauchers mit elektrischer Energie und Daten. Hierzu weist der Verbraucher üblicherweise einen in Fig. 2 nur angedeuteten Stromabnehmer 50 mit in der Regel mehreren, im vorliegenden Ausführungsbeispiel zwei in Querrichtung Q nebeneinander in, bevorzugt elektrisch isolierenden, Schleifkontakthaltern 51, 51' angeordneten Schleifkontakten 52, 52` auf. Dabei weisen die Schleifkontakte 52, 52` in Längsrichtung L die gleiche Länge auf und stehen in Längsrichtung gleich weit nach vorne und hinten über, so dass ihre in Längsrichtung vorderen und hinteren Enden in Längsrichtung L nicht versetzt, sondern zueinander weitgehend bündig sind. Die Schleifkontakte 52, 52` fahren also gleichzeitig nebeneinander in die Stromschienen 6, 6` ein bzw. aus, wobei aufgrund von Fertigungstoleranzen, der meist beweglichen, oft federnden Lagerung der einzelnen Schleifkontakte 52, 52` oder anderen Einflüssen ein geringer Versatz in Längsrichtung L von wenigen Millimetern vorkommen kann.

In dem vorliegenden Ausführungsbeispiel dient der Leiterstrang 3 zur Datenübertragung, während der Leiterstrang 3' der elektrischen Energieübertragung zur Strom- bzw. Spannungsversorgung des elektrischen Verbrauchers dient. Grundsätzlich kann die Schleifleitung 2 aber auch mehr als die in den Zeichnungen dargestellten Leiterstränge 3, 3' aufweisen, beispielsweise drei Leiterstränge für die 3-phasige elektrische Energieübertragung und einen oder auch mehrere Leiterstränge für die Datenübertragung oder anderer Zwecke, für die eine möglichst lange Kontaktierung der Schleifkontakte mit letzteren Leitersträngen und insbesondere eine frühzeitigere und länger dauernde Kontaktierung gewünscht ist.

Wenn hier von Energieübertragung die Rede ist, ist dabei die zur elektrischen Energieversorgung von Verbrauchern oder auch zur Rückspeisung von elektrischer Energie vom Verbraucher zur Schleifleitung 2 gemeint, welche in der Regel in höheren Leistungsbereichen angesiedelt ist. Typisch sind hier Ströme zwischen wenigen Ampere bis über 1.250 Ampere bei Spannungen zwischen 24-48 Volt bis über 700 V, typischerweise im Bereich von 690 Volt.

Die Schleifkontakte 52, 52' greifen jeweils durch in Längsrichtung L verlaufende Längsschlitze 7, 7' in trogförmige Schleifabschnitte 8, 8' der Stromschienen 6, 6` ein und gleiten dann in Längsrichtung L elektrisch und mechanisch kontaktierend in den Schleifabschnitten 8, 8`, um die elektrische bzw. Datenübertragungs-Verbindung zwischen dem beweglichen Verbraucher und der Schleifleitung 2 herzustellen. Dabei werden die Schleifkontakte 52, 52' über einen nicht gezeigten Zustellmechanismus des Stromabnehmers 50 beständig in Höhenrichtung H zu den Stromschienen 6, 6` hin gedrückt, also in Fig. 2 nach unten vom Stromabnehmer 50 weg, beispielsweise über an sich bekannte Federarme. Bevorzugt kann dabei jeder einzelne Schleifkontakt 52, 52' mittels des Zustellmechanismus bzw. einer eigenen Zustellvorrichtung von den anderen Schleifkontakten 52, 52' getrennt und unabhängig zu den Stromschienen 6, 6` bewegt werden. Die Ausgestaltungen des Verbrauchers, des Stromabnehmers 50, des Zustellmechanismus oder der Zustellvorrichtungen und der Schleifkontakte 52, 52' sowie die Verbindung mit der Schleifleitung 2 sind dem Fachmann hinlänglich bekannt.

An die trogförmigen Schleifabschnitte 8, 8' schließen sich Seitenwandungen 9, 9' an, die in Höhenrichtung H in Fig. 2 nach unten U-förmig über den Boden der Schleifabschnitte 8, 8' hinausreichen. An ihren freien Enden weisen die Seitenwandungen 9, 9' nach innen bzw. aufeinander zu und weisen zu den trogförmigen Schleifabschnitten 8, 8' hin gebogene Schenkelenden 10, 10' auf, also in etwa in Form der Ziffer "1" V-förmig nach innen und zu den Schleifabschnitten 8, 8' hin. Hierdurch wird zwischen den Schleifabschnitten 8, 8', den Seitenwandungen 9, 9' und den Schenkelenden 10, 10' jeweils ein in Längsrichtung L verlaufender Stromschieneninnenraum 11, 11' gebildet.

Zum einfacheren Einfahren der Schleifkontakte 52, 52' in die Stromschienen 6, 6` ist am Ende der Schleifleitung 2 ein in Fig. 1, 3 und 4 gezeigter Einfahrtrichter 12 als Einfahrhilfe angeordnet. Der Einfahrtrichter 12 weist dabei eine sich von oben gesehen trichterförmig verjüngende, aus seitlicher Sicht in Höhenrichtung H von seinem Einfahrende nach oben ansteigende Einfahrrampe 13 als Ein-/Ausfahrbereich auf, in welche die Schleifkontakte 52, 52' von in Fig. 1 rechts kommend einfahren und dann angehoben werden. Eine keilförmige Einfädelhilfe 14 am Übergang zwischen der ansteigenden Einfahrrampe 13 zu einem in Längsrichtung L parallel zu den Leiterstränge 3, 3' verlaufenden geraden Anschlussbereich 15 des Einfahrtrichters 13 sorgt dann dafür, dass die Schleifkontakte 52, 52` leicht in den jeweils für sie vorgesehenen Leiterstrang 3, 3' eingefahren werden können. Dabei werden die Schleifkontakte 52, 52` vor dem Einfahren in den Einfahrtrichter 12 mittels des Zustellmechanismus oder der Zustellvorrichtungen in einer in Höhenrichtung H ausgefahrenen Stellung gehalten, also in Fig. 2 vom Stromabnehmer 50 entfernt nach unten. Beim Einfahren in den Einfahrtrichter 12 werden die Schleifkontakte 52, 52` dann durch die schräg ansteigende Einfahrrampe 13 in Höhenrichtung H zum Stromabnehmer 50 hin bewegt.

Der Anschlussbereich 15 dient zudem dazu, die Leiterstränge 3, 3' fest mit dem Einfahrtrichter 12 zu verbinden, wie nachfolgend im Detail vor allem anhand des Leiterstrangs 3 beschrieben.

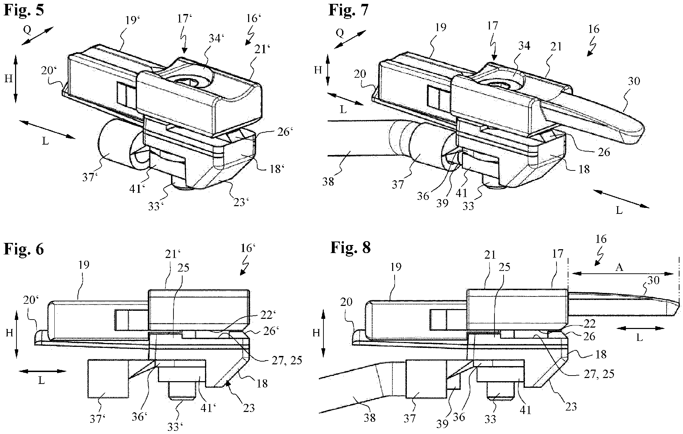

Wie besonders aus der Explosionsdarstellung in Fig. 1 hervorgeht, wird der Leiterstrang 3 mittels einer in Fig. 7 und 8 im Detail gezeigten Vorkontaktklemme 16 an dem Einfahrtrichter 12 befestigt. Die Vorkontaktklemme 16 entspricht dabei weitgehend einer in Fig. 5 und 6 entsprechend dargestellten Anschlussklemme 16`, so dass gleiche Teile mit gleichen Bezugszeichen bezeichnet werden, wobei die Teile der Anschlussklemme 16' mit einem Apostroph versehen werden. Entsprechende Ausführungen zur Vorkontaktklemme 16 gelten entsprechend auch für die Anschlussklemme 16`, sofern nicht anders angegeben.

Die Vorkontaktklemme 16 weist ein oberes Klemmstück 17 und ein unteres Klemmstück 18 auf, mittels derer der Leiterstrang 3 am Einfahrtrichter 12 festgeklemmt und die elektrische Verbindung zwischen einem Datenkabel 38 und der Stromschiene 6 hergestellt wird. Die Klemmstücke 17 und 18 sind deshalb vorteilhaft aus einem elektrisch gut leitenden Material, insbesondere Metall ausgebildet. Das obere und das untere Klemmstück 17 bzw. 18 weisen dabei jeweils ein Einsteckende 19 bzw. 20 auf, welche zur Montage gemeinsam in den Innenraum 11 des Leiterstrangs 3 eingeschoben werden und einen elektrischen Kontakt zur Stromschiene 6 herstellen.

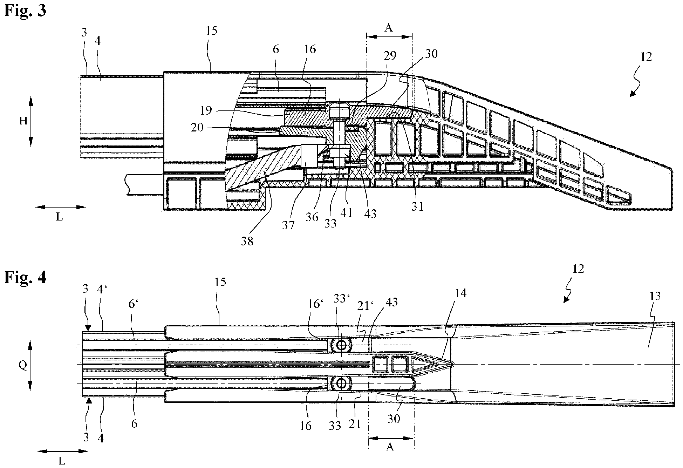

Das obere Klemmstück 17 weist in einem Klemmbereich 21 eine im zusammengesetzten Zustand dem unteren Klemmstück 18 zugewandte flache Unterseite 22 auf. Das untere Klemmstück 18 hingegen weist in einem Klemmbereich 23 eine im zusammengesetzten Zustand der Unterseite 22 des oberen Klemmstücks 17 zugewandte Oberseite 24 auf. Die Oberseite 24 weist eine zwischen einer Vorsprungsfläche 25 und einer Anschlagsnase 26 in Höhenrichtung H vom oberen Klemmstück 18 weg versetzte Klemmfläche 27 auf. Wie in Fig. 4 gut erkennbar, bildet sich dadurch im zusammengesetzten Zustand ein Klemmspalt 28 zwischen dem oberen und unteren Klemmstück 17, 18 aus, welcher eine in Querrichtung Q verlaufende Klemmrippe 29 des Einfahrtrichters 12 umgreift.

Wie insbesondere aus Fig. 5 bis 8 hervorgeht, unterscheiden sich die Anschlussklemme 16' und die Vorkontaktklemme 16 dadurch, dass bei der Vorkontaktklemme 16 auf der dem Einsteckende 19 in Längsrichtung L entgegengesetzten Seite des oberen Klemmstücks 17 eine in Längsrichtung L überstehende längliche Kontaktzunge 30 als Vorkontakt aus einem elektrisch leitenden Material angeordnet ist. In endmontiertem Zustand ragt die Kontaktzunge 30 in Längsrichtung L um einen Überstand A zum Einfahrbereich des Einfahrtrichters 12 über das einfahrseitige, den Einsteckenden 19, 20 und der Schleifleitung 2 abgewandte Ende der Klemmbereiche 23, 23` beider Klemmen 16, 16' und somit auch über das einfahrseitige Ende der parallelen Anschlussklemme 16' hinaus. Der Teil der Vorkontaktklemme 16 bis zum Beginn der Kontaktzunge 30 stellt somit einen Verbindungsbereich zur Herstellung einer elektrischen Verbindung mit dem Endbereich der Stromschiene 6 des Leiterstrangs 3 dar, so dass die Kontaktzunge 30 auf der in Längsrichtung L der Stromschiene 6 abgewandten Seite der Vorkontaktklemme 16 über den Verbindungsbereich hinausragt.

Um beim Einfahren des oft aus einem weichen Material bestehenden Schleifkontakts 52 ein Verkannten zu vermeiden, weist der Einfahrtrichter 12 im Bereich der Einfädelhilfe 14 in dem von der Kontaktzunge 30 überdeckten Bereich eine an deren Form angepasste, besonders gut in Fig. 3 erkennbare Mulde 31 auf. Um das Verkannten und Beschädigungen des Schleifkontakts 52 zu vermeiden, dient auch die in Fig. 4 erkennbare runde Front der Kontaktzunge 30 und die entsprechend geformte Übergangskante 32 der Mulde 31.

Um eine gute und insbesondere mittige Führung der Schleifkontakte 52, 52` im Bereiche der Klemmen 16, 16' und einen möglichst sanften Übergang zu den Schleifabschnitten 8, 8' zu ermöglichen, weisen die Klemmbereiche 23, 23' quer zur Längsrichtung L einen an den trogförmigen Querschnitt der Schleifabschnitte 8, 8' angepassten Querschnitt auf. Entsprechendes gilt auch für den Querschnitt der Kontaktzunge 30.

Somit stellt der in die Stromschiene 6 einfahrende Schleifkontakt 52 den elektrischen Kontakt zur Vorkontaktklemme 16 und zur Stromschiene 6 früher her als der parallel und in Längsrichtung L nicht gegenüber dem Schleifkontakt 52 versetzte, der Stromschiene 6` zugeordnete weitere Schleifkontakt 52`. Entsprechendes gilt auch beim Ausfahren, der aus der Stromschiene 6 ausfahrende Schleifkontakt 52 bleibt länger in elektrischer Verbindung zur Stromschiene 6 als der neben ihm aus der Stromschiene 6` ausfahrende Schleifkontakt 52`.

Im vorliegenden Ausführungsbeispiel ist die Kontaktzunge 30 direkt an den Klemmbereich 23 des oberen Klemmstücks 17 einstückig angeformt. Die Kontaktzunge 30 kann aber auch als eigenständiges Bauteil ausgebildet und dann elektrisch leitend mit dem oberen Klemmstück 17 verbunden sein. In letzterem Fall kann die Kontaktzunge 30 sogar an oder in dem Einfahrtrichter 12 angeordnet sein und über eine Steckverbindung oder anderweitig mit der Vorkontaktklemme 16 elektrisch verbunden werden. Hierdurch können stets gleich ausgebildete Vorkontaktklemmen 16 für alle Stromschienen verwendet werden, und die für den längeren Vorkontakt bzw. Kontaktzunge 30 vorgesehenen Vorkontaktklemmen 16 würden dann einfach durch die Ausgestaltung des Einfahrtrichters 12 mit bzw. ohne Kontaktzungen 30 bestimmt. Besonders vorteilhaft kann dabei die an dem Einfahrtrichter 12 angeordnete Kontaktzunge 30 einen Steckverbinder aufweisen, welcher in eine entsprechende Einsteckbuchse an der Vorkontaktklemme eingesteckt werden kann, um auf einfache Weise den elektrischen Kontakt zwischen Vorkontakt und Vorkontaktklemme herzustellen.

Zur Montage der Vorkontaktklemme 16 wird eine Befestigungsschraube 33 durch in Höhenrichtung H, also senkrecht zur Längsrichtung L und zur Querrichtung Q verlaufende Durchgangsöffnungen 34, 35 im oberen bzw. unteren Klemmstück 17, 18 sowie eine Ringöse 36 eines Kabelschuhs 37 des elektrischen Anschluss- bzw. Datenkabels 38 gesteckt und auf der dem Klemmstück 18 abgewandten Seite der Ringöse 36 mittels einem als Vierkantmutter 41 ausgebildeten Befestigungselement zunächst lose verschraubt. Zur Befestigung können aber auch anderen geeignete Befestigungselemente als die Befestigungsschraube 33 und die Vierkantmutter 41 verwendet werden. Der Kabelschuh 37 ist in an sich bekannter Weise mit einer von einem isolierenden Kabelmantel 39 umgebenen elektrische Leiterader 40 des Anschluss- bzw. Datenkabels 38 verbunden.

Da das Einsteckende 20 des unteren Klemmstücks 18 gegenüber der Oberseite 24 leicht in Höhenrichtung H nach oben, also zum oberen Klemmstück 17 geneigt ist, und die Anschlagsnase 26 in Höhenrichtung H höher ist als die Vorsprungsfläche 25 wird beim Festschrauben der Befestigungsschraube 20 die in Fig. 3 erkennbare leicht geneigte Stellung des unteren Klemmstücks 18 erhalten, wodurch eine sichere Klemmung des Einsteckendes 19 in dem Innenraum 11 des Leiterstrangs 3 erreicht wird.

Wie insbesondere aus Fig. 1, 3 und 4 hervorgeht, ragen die zur Verbindung vorgesehenen Enden der Stromschienen 6, 6` über die Isolierprofile 4, 4` hinaus. Zur Verbindung mit dem Einfahrtrichter 12 wird die Vorkontaktklemme 16 in bereits lose mit dem Anschlusskabel 38 verschraubtem Zustand in den Innenraum 11 eingesteckt, bis die Stirnseite der Stromschiene 6 an einem in Höhenrichtung verlaufenden oberen bzw. unteren Überstand der Klemmbereiche 21, 23 gegenüber den Einsteckenden 19, 20 des oberen bzw. unteren Klemmstücks 17, 18 anschlagen. Entsprechend wird die Anschlussklemme 16' in den Innenraum 11' der zweiten Stromschiene 6` eingesteckt.

Anschließend werden die Enden der Stromschienen 6, 6` und die daran angrenzenden Isolierprofile 4, 4` gemeinsam mit den Klemmen 16, 16' in entsprechend ausgebildete Anschlussöffnungen 42, 42` des Einfahrtrichters 12 soweit eingeschoben, bis die in Längsrichtung vorderen Stirnseiten der Klemmbereiche 21, 21', 23, 23' der oberen und unteren Klemmstücke 17, 17', 18, 18' an einer in Höhenrichtung H verlaufenden Stirnwand 43 des Einfahrtrichters 12 anschlagen und die Klemmrippe 29 umgreifen. Da die Befestigungsschraube 33, 33' der beiden Klemmen 16, 16' noch nicht vollständig angezogen sind, können die Klemmstücke über die Klemmrippe 29 geschoben werden, was durch die abgeschrägten, gemeinsam einen Trichter- bzw. V-förmigen Verlauf bildenden Stirnseiten der Unterseite 22 des oberen Klemmstücks 17 und der Anschlagsnase 26 des unteren Klemmstücks 18 erleichtert wird. Ggf. kann auch nur die Unterseite 22 bzw. die Anschlagsnase 26 abgeschrägt sein, wobei die beidseitige Abschrägung besonders montagefreundlich ist.

Anschließend wird die Befestigungsschraube 33 festgeschraubt, wodurch die Vorkontaktklemme 16 dann einerseits fest mit dem Einfahrtrichter 12 und andererseits fest und elektrisch leitend mit der Stromschiene 6 und dem Leiterstrang 3 verbunden wird. Entsprechend wird die Anschlussklemme 6` einerseits fest mit dem Einfahrtrichter 12 und andererseits fest und elektrisch leitend mit der Stromschiene 6` und dem Leiterstrang 3' verbunden. Zudem werden hierdurch die Ringösen 36, 36` fest an die Unterseite des jeweiligen unteren Klemmstücks 23, 23' angeschlagen, so dass eine gut elektrisch leitende Verbindung zu dem jeweiligen Anschluss- bzw. Datenkabel 38 hergestellt wird, um im Fall der Vorkontaktklemme 16 Daten und im Fall der Anschlussklemme 16' elektrische Energie zu übertragen. Wie oben beschrieben, kann die Vorkontaktklemme 16 auch für andere Zwecke als die Datenübertragung verwendet werden, welche eine Kontaktierung vor und einen Kontaktabbruch nach der oder den für die elektrische Energieübertragung vorgesehenen Anschlussklemmen respektive Leitersträngen sicherstellt.

### Bezugszeichenliste

- 1: Schleifleitungssystem
- 2: Schleifleitung
- 3, 3': Leiterstränge
- 4, 4': Isolierprofile
- 5: Verbindungssteg Isolierprofile
- 6, 6`: Stromschienen
- 7, 7': Längsschlitze Leiterstränge
- 8, 8': trogförmige Schleifabschnitte
- 9, 9': Seitenwandungen erste Stromschiene
- 10, 10': Schenkelenden erste Stromschiene
- 11, 11': Stromschienen-Innenräume
- 12: Einfahrtrichter
- 13: Einfahrrampe
- 14: Einfädelhilfe
- 15: Anschlussbereich
- 16: Vorkontaktklemme
- 16': Anschlussklemme
- 17, 17': oberes Klemmstück
- 18, 18': unteres Klemmstück
- 19, 19': Einsteckende oberes Klemmstück
- 20, 20': Einsteckende unteres Klemmstück
- 21, 21': Klemmbereich oberes Klemmstück
- 22, 22': Unterseite oberes Klemmstück
- 23, 23 `: Klemmbereich unteres Klemmstück
- 24, 24': Oberseite unteres Klemmstück
- 25, 25': Vorsprung unteres Klemmstück
- 26, 26': Anschlagsnase unteres Klemmstück
- 27, 27': Klemmfläche
- 28, 28': Klemmspalt
- 29: Klemmrippe Einfahrtrichter
- 30: Kontaktzunge (Vorkontakt)
- 31: Mulde im Einfahrtrichter
- 32: Übergangskante Mulde
- 33, 33': Befestigungsschraube
- 34, 34': Durchgangsöffnungen
- 35: Durchgangsöffnungen
- 36: Ringöse
- 37: Kabelschuh
- 38: Anschluss- bzw. Datenkabel
- 39: elektrische Leiterader
- 40: isolierender Kabelmantel
- 41: Vierkantmutter
- 42, 42`: Anschlussöffnungen
- 43: Stirnwand
- 50: Stromabnehmer
- 51, 51': Schleifkontakthalterungen
- 52, 52`: Schleifkontakte

- A: Überstand Vorkontaktklemme
- L: Längsrichtung Schleifleitung, Vorkontakt- und Anschlussklemme
- Q: Querrichtung Schleifleitung, Vorkontakt- und Anschlussklemme
- H: Höhenrichtung Schleifleitung, Vorkontakt- und Anschlussklemme

## Patentansprüche

1. Vorkontaktklemme (16) zum Befestigen eines in eine Längsrichtung (L) verlaufenden Leiterstrangs (3) einer Schleifleitung (2) an einer Einfahrhilfe (12), wobei die Vorkontaktklemme (16) einen Verbindungsbereich zur Herstellung einer elektrischen Verbindung mit einem Endbereich einer elektrisch leitenden Stromschiene (6) des Leiterstrangs (3) aufweist, wobei auf einer in Längsrichtung (L) der Stromschiene (6) abgewandten Seite der Vorkontaktklemme (16) ein in Längsrichtung (L) über den Verbindungsbereich hinausreichender Vorkontakt (30) vorgesehen ist, **dadurch gekennzeichnet, dass** die Vorkontaktklemme (16) einen in Längsrichtung (L) verlaufenden, bevorzugt muldenförmigen, Gleitbereich für einen Schleifkontakt (52) aufweist.

2. Vorkontaktklemme (16) nach Anspruch 1, **dadurch gekennzeichnet, dass** der Vorkontakt (30) eine in Längsrichtung (L) verlaufende Kontaktzunge, bevorzugt mit vorne abgerundetem Ende, ist.

3. Vorkontaktklemme (16) nach Anspruch 1 oder 2, **dadurch gekennzeichnet, dass** der Vorkontakt (30) um einen vorgegebenen Überstand (A) über den Verbindungsbereich hinaussteht.

4. Einfahrhilfe (12) zum Einführen mindestens eines an einem elektrischen Verbraucher angeordneten ersten Schleifkontakts (52) in einen ersten Leiterstrang (3) einer Schleifleitung (2) und mindestens eines neben dem ersten Schleifkontakt (52) angeordneten zweiten Schleifkontakts (52') in einen neben dem ersten Leiterstrang (3) angeordneten zweiten Leiterstrang (3') der Schleifleitung (2), wobei die Einfahrhilfe (12) mittels einer Vorkontaktklemme (16) nach einem der Ansprüche 1 bis 3 mit dem ersten Leiterstrang (3) und einer Anschlussklemme (16') mit dem zweiten Leiterstrang (3') verbindbar ist, wobei die Einfahrhilfe (12) einen der Schleifleitung (2) in eine Längsrichtung (L) der Schleifleitung (2) abgewandten Ein-/Ausfahrbereich (13) für die Schleifkontakte (52, 52') aufweist, **dadurch gekennzeichnet, dass** die Einfahrhilfe (12) einen in Längsrichtung (L) um einen Überstand (A) in Richtung des Ein-/Ausfahrbereichs (13) verlaufenden Aufnahmebereich (31) für einen Vorkontakt (30) der Vorkontaktklemme (16) aufweist.

5. Einfahrhilfe (12) nach Anspruch 4, **dadurch gekennzeichnet, dass** die Einfahrhilfe (12) ein Einfahrtrichter mit einer in eine zur Längsrichtung (L) senkrecht verlaufenden Höhenrichtung (H) zu seinem schleifleitungsseitigen Ende der Einfahrhilfe (12) hin ansteigenden Einfahrrampe (13) ist.

6. Einfahrhilfe (12) nach Anspruch 4 oder 5, **dadurch gekennzeichnet, dass** der Aufnahmebereich (31) eine an die Form des Vorkontakts (16) angepasste Vertiefung (31) aufweist.

7. Einfahrhilfe (12) nach einem der Ansprüche 4 bis 6, **dadurch gekennzeichnet, dass** der Vorkontakt (30) fest in dem Aufnahmebereich (31) angeordnet ist.

8. Einfahrhilfe (12) nach Anspruch 7 und/oder Vorkontaktklemme (16) nach einem der Ansprüche 1 bis 3, **dadurch gekennzeichnet, dass** der Vorkontakt (30) als eigenständiges Bauteil ausgebildet ist, insbesondere getrennt von der Vorkontaktklemme (16).

9. Einfahrhilfe (12) nach Anspruch 7 oder 8 und/oder Vorkontaktklemme (16) nach einem der Ansprüche 1 bis 3 oder 8, **dadurch gekennzeichnet, dass** der Vorkontakt (30) einen Steckverbinder und die Vorkontaktklemme (16) eine entsprechende Einsteckbuchse für den Steckverbinder aufweist.

10. Schleifleitungssystem (1) mit einer Schleifleitung (2) mit mindestens zwei in eine Längsrichtung (L) der Schleifleitung (2) verlaufenden, nebeneinander angeordneten Leitersträngen (3, 3') für mindestens zwei nebeneinander angeordnete Schleifkontakte (52, 52') eines längs der Schleifleitung (2) verfahrbaren elektrischen Verbrauchers und mindestens einer an einem Ende der Schleifleitung (2) angeordneten Einfahrhilfe (12) zum Einführen eines ersten Schleifkontakts (52) in den ersten Leiterstrang (3) und eines zweiten Schleifkontakts (52') in den zweiten Leiterstrang (3'), wobei der zweite Leiterstrang (3') mittels einer Anschlussklemme (16') mit der Einfahrhilfe (12) verbunden ist, **dadurch gekennzeichnet, dass** der erste Leiterstrang (3) mittels einer Vorkontaktklemme (16) nach einem der Ansprüche 1 bis 3, 8 oder 9 mit der Einfahrhilfe (12) verbunden ist.

11. Schleifleitungssystem (1) nach Anspruch 10, **dadurch gekennzeichnet, dass** die Einfahrhilfe (12) einen der Schleifleitung (2) in Längsrichtung (L) abgewandten Ein-/Ausfahrbereich (13) für die Schleifkontakte (52, 52') aufweist, wobei der Vorkontakt (30) der Vorkontaktklemme (16) in Längsrichtung (L) weiter in Richtung des Einfahrbereichs (13) reicht als die Anschlussklemme (16').

12. Schleifleitungssystem (1) nach Anspruch 10 oder 11, **dadurch gekennzeichnet, dass** der Ein-/Ausfahrbereich (13) eine zur Aufnahme des Vorkontakts (16) vorgesehene, bevorzugt an die Form des Vorkontakts (16) angepasste Vertiefung (31) aufweist.

13. Schleifleitungssystem (1) nach einem der Ansprüche 10 bis 12, **dadurch gekennzeichnet, dass** ein Gleitbereich der Vorkontaktklemme (16) für den Schleifkontakt (52) gleichmäßig in einen Schleifabschnitt (8) einer Stromschiene (6) des ersten Leiterstrangs (3) übergeht.

14. Schleifleitungssystem (1) nach einem der Ansprüche 10 bis 13, **dadurch gekennzeichnet, dass** der Vorkontakt (30) gleichmäßig in den Einfahrbereich (13) der Einfahrhilfe (12) übergeht.

## Claims

1. Pre-contact fastener (16) for fastening a conductor line (3) of a conductor rail (2) extending in a longitudinal direction (L) to a pickup guide (12), the pre-contact fastener (16) having a connection area for establishing an electrical connection to an end area of an electrically conductive conductor bar (6) of the conductor line (3), wherein a pre-contact (30) extending beyond the connection area in the longitudinal direction (L) is provided on a side of the pre-contact fastener (16) facing away from the conductor bar (6) in the longitudinal direction (L), **characterised in that** the pre-contact fastener (16) has a preferably recess-shaped sliding area extending in the longitudinal direction (L) for a sliding contact (52).

2. Pre-contact fastener (16) according to claim 1, **characterised in that** the pre-contact (30) is a contact tongue extending in the longitudinal direction (L), preferably with a rounded end at the front.

3. Pre-contact fastener (16) according to claim 1 or 2, **characterised in that** the pre-contact (30) projects beyond the connection area by a predetermined projection (A).

4. Pickup guide (12) for inserting at least one first sliding contact (52), arranged on an electrical consumer, into a first conductor line (3) of a conductor rail (2) and at least one second sliding contact (52'), arranged next to the first sliding contact (52), into a second conductor line (3'), arranged next to the first conductor line (3), of the conductor rail (2), wherein the pickup guide (12) can be connected to the first conductor line (3) by means of a pre-contact fastener (16) according to one of claims 1 to 3 and a connection fastener (16') can be connected to the second conductor line (3'), wherein the pickup guide (12) has an entry/exit area (13) for the sliding contacts (52, 52') facing away from the conductor rail (2) in a longitudinal direction (L) of the conductor rail (2), **characterised in that** the pickup guide (12) has a receiving area (31) for a pre-contact (30) of the pre-contact fastener (16) extending in the longitudinal direction (L) by a projection (A) in the direction of the entry/exit area (13).

5. Pickup guide (12) according to claim 4, **characterised in that** the pickup guide (12) is a drive-in funnel with a drive-in ramp (13) rising in a height direction (H) perpendicular to the longitudinal direction (L) towards its conductor rail side end of the pickup guide (12).

6. Pickup guide (12) according to claim 4 or 5, **characterised in that** the receiving area (31) has a recess (31) adapted to the shape of the pre-contact (16).

7. Pickup guide (12) according to one of claims 4 to 6, **characterised in that** the pre-contact (30) is arranged fixedly in the receiving area (31).

8. Pickup guide (12) according to claim 7 and/or pre-contact fastener (16) according to one of claims 1 to 3, **characterised in that** the pre-contact (30) is designed as an independent component, in particular separate from the pre-contact fastener (16).

9. Pickup guide (12) according to claim 7 or 8 and/or pre-contact fastener (16) according to one of claims 1 to 3 or 8, **characterised in that** the pre-contact (30) has a plug connector and the pre-contact fastener (16) has a corresponding plug-in socket for the plug connector.

10. Conductor rail system (1) having a conductor rail (2) with at least two conductor lines (3, 3'), which run in a longitudinal direction (L) of the conductor rail (2) and are arranged next to one another, for at least two sliding contacts (52, 52') of an electrical consumer movable along the conductor rail (2) and at least one pickup guide (12) arranged at one end of the conductor rail (2) for inserting a first sliding contact (52) into the first conductor line (3) and a second sliding contact (52') into the second conductor line (3'), wherein the second conductor line (3') is connected to the pickup guide (12) by means of a connection fastener (16'), **characterised in that** the first conductor line (3) is connected to the pickup guide (12) by means of a pre-contact fastener (16) according to one of claims 1 to 3, 8 or 9.

11. Conductor rail system (1) according to claim 10, **characterised in that** the pickup guide (12) has an entry/exit area (13) for the sliding contacts (52, 52') facing away from the conductor rail (2) in the longitudinal direction (L), wherein the pre-contact (30) of the pre-contact fastener (16) extends further in the longitudinal direction (L) in the direction of the entry area (13) than the connection fastener (16').

12. Conductor rail system (1) according to claim 10 or 11, **characterised in that** the entry/exit area (13) has a recess (31) provided for receiving the pre-contact (16) and preferably adapted to the shape of the pre-contact (16).

13. Conductor rail system (1) according to one of claims 10 to 12, **characterised in that** a sliding area of the pre-contact fastener (16) for the sliding contact (52) merges evenly into a sliding section (8) of a conductor bar (6) of the first conductor line (3).

14. Conductor rail system (1) according to one of claims 10 to 13, **characterised in that** the pre-contact (30) merges evenly into the retraction area (13) of the pickup guide (12).

## Revendications

1. Borne de pré-contact (16) pour la fixation d'une gaine conductrice (3) d'une ligne de frottement (2) s'étendant dans une direction longitudinale (L) sur un auxiliaire d'entrée (12), dans laquelle la borne de pré-contact (16) présente une zone de liaison pour l'établissement d'une liaison électrique avec une zone d'extrémité d'une barre omnibus (6) électro-conductrice de la gaine conductrice (3), dans laquelle un pré-contact (30) dépassant de la zone de liaison dans la direction longitudinale (L) est prévu sur une face de la borne de pré-contact (16) opposée à la barre omnibus (6) dans la direction longitudinale (L), **caractérisée en ce que** la borne de pré-contact (16) présente une zone de glissement pour un contact frottant (52), de préférence en forme de creux, s'étendant dans la direction longitudinale (L).

2. Borne de pré-contact (16) selon la revendication 1, **caractérisée en ce que** le pré-contact (30) est une languette de contact s'étendant dans la direction longitudinale (L), de préférence avec une extrémité arrondie à l'avant.

3. Borne de pré-contact (16) selon la revendication 1 ou 2, **caractérisée en ce que** le pré-contact (30) fait saillie de la zone de liaison d'une partie saillante (A) prédéfinie.

4. Auxiliaire d'entrée (12) pour l'introduction au moins d'un premier contact frottant (52) disposé sur un consommateur électrique dans une première gaine conductrice (3) d'une ligne de frottement (2) et au moins d'un deuxième contact frottant (52') disposé à côté du premier contact frottant (52) dans une deuxième gaine conductrice (3') de la ligne de frottement (2) disposée à côté de la première gaine conductrice (3), dans lequel l'auxiliaire d'entrée (12) peut être relié à la première gaine conductrice (3) au moyen d'une borne de pré-contact (16) selon l'une quelconque des revendications 1 à 3 et à la deuxième gaine conductrice (3') au moyen d'une borne de raccordement (16'), dans lequel l'auxiliaire d'entrée (12) présente une zone d'entrée/de sortie (13) pour les contacts frottants (52, 52') opposée à la ligne de frottement (2) dans une direction longitudinale (L) de la ligne de frottement (2), **caractérisé en ce que** l'auxiliaire d'entrée (12) présente une zone de réception (31) pour un pré-contact (30) de la borne de pré-contact (16) s'étendant dans la direction longitudinale (L) autour d'une partie saillante (A) en direction de la zone d'entrée/de sortie (13) .

5. Auxiliaire d'entrée (12) selon la revendication 4, **caractérisé en ce que** l'auxiliaire d'entrée (12) est un entonnoir d'entrée avec une rampe d'entrée (13) s'élevant dans une direction de hauteur (H) s'étendant perpendiculairement à la direction longitudinale (L) vers son extrémité côté ligne de contact de l'auxiliaire d'entrée (12).

6. Auxiliaire d'entrée (12) selon la revendication 4 ou 5, **caractérisé en ce que** la zone de réception (31) présente un évidement (31) adapté à la forme du pré-contact (16).

7. Auxiliaire d'entrée (12) selon l'une quelconque des revendications 4 à 6, **caractérisé en ce que** le pré-contact (30) est disposé fixement dans la zone de réception (31).

8. Auxiliaire d'entrée (12) selon la revendication 7 et/ou borne de pré-contact (16) selon l'une quelconque des revendications 1 à 3, caractérisé (e) en ce que le pré-contact (30) est réalisé en tant que composant indépendant, en particulier séparé de la borne de pré-contact (16).

9. Auxiliaire d'entrée (12) selon la revendication 7 ou 8 et/ou borne de pré-contact (16) selon l'une quelconque des revendications 1 à 3 ou 8, caractérisé (e) en ce que le pré-contact (30) présente un connecteur à fiche et la borne de pré-contact (16) une prise femelle enfichable correspondante pour le connecteur à fiche.

10. Système de ligne de frottement (1) avec une ligne de frottement (2) avec au moins deux gaines conductrices (3, 3') s'étendant dans une direction longitudinale (L) de la ligne de frottement (2), disposées l'une à côté de l'autre pour au moins deux contacts frottants (52, 52') disposés l'un à côté de l'autre d'un consommateur électrique déplaçable le long de la ligne de frottement (2) et au moins un auxiliaire d'entrée (12) disposé sur une extrémité de la ligne de frottement (2) pour l'introduction d'un premier contact frottant (52) dans la première gaine conductrice (3) et d'un deuxième contact frottant (52') dans la deuxième gaine conductrice (3'), dans lequel la deuxième gaine conductrice (3') est reliée à l'auxiliaire d'entrée (12) au moyen d'une borne de raccordement (16'), **caractérisé en ce que** la première gaine conductrice (3) est reliée à l'auxiliaire d'entrée (12) au moyen d'une borne de pré-contact (16) selon l'une quelconque des revendications 1 à 3, 8 ou 9.

11. Système de ligne de frottement (1) selon la revendication 10, **caractérisé en ce que** l'auxiliaire d'entrée (12) présente une zone d'entrée/de sortie (13) pour les contacts frottants (52, 52') opposée à la ligne de frottement (2) dans la direction longitudinale (L), dans lequel le pré-contact (30) de la borne de pré-contact (16) va dans la direction longitudinale (L) plus loin en direction de la zone d'entrée (13) que la borne de raccordement (16').

12. Système de ligne de frottement (1) selon la revendication 10 ou 11, **caractérisé en ce que** la zone d'entrée/de sortie (13) présente un évidement (31) destiné à recevoir le pré-contact (16), de préférence adapté à la forme du pré-contact (16) .

13. Système de ligne de frottement (1) selon l'une quelconque des revendications 10 à 12, **caractérisé en ce qu'**une zone de glissement de la borne de pré-contact (16) pour le contact frottant (52) se prolonge de manière uniforme en une section de frottement (8) d'un barre omnibus (6) de la première gaine conductrice (3).

14. Système de ligne de frottement (1) selon l'une quelconque des revendications 10 à 13, **caractérisé en ce que** le pré-contact (30) se prolonge de manière uniforme en la zone d'entrée (13) de l'auxiliaire d'entrée (12).
